# Europäisches Patentamt
## European Patent Office
## Office européen des brevets

(11) Veröffentlichungsnummer: **0 072 022**
**A1**

(12) # EUROPÄISCHE PATENTANMELDUNG

(21) Anmeldenummer: **82107215.4**

(22) Anmeldetag: **10.08.82**

(51) Int. Cl.³: **H 02 P 7/28**

(30) Priorität: **10.08.81 DE 3131574**

(43) Veröffentlichungstag der Anmeldung: **16.02.83**
**Patentblatt 83/7**

(84) Benannte Vertragsstaaten: **AT BE CH DE FR GB IT LI LU NL SE**

(71) Anmelder: **ASR Servotron AG, Avenue des Grandes-Communes 8, CH-1213 Le Petit-Lancy/Genf (CH)**

(72) Erfinder: **Petsch, Johann, Anzinger Strasse 30, D-8011 Poing (DE)**
Erfinder: **Kohn, Eric F., Avenue des Grandes-Communes 8, CH-1213 Le Petit Lancy, Genf (CH)**

(74) Vertreter: **Heusler, Wolfgang, Dipl.-Ing. et al, Von Bezold, Dieter, Dr. Schütz, Peter, Dipl.-Ing. Heusler, Wolfgang, Dipl.-Ing. Postfach 86 02 60, D-8000 München 86 (DE)**

(54) **Stromregelschaltung für einen von einer Leistungstreiberstufe gesteuerten Verbraucher.**

(57) Es wird eine digitale Stromregelschaltung insbesondere für einen Gleichstrommotor beschrieben, der über mit Impulsmodulation gesteuerte Leistungstransistoren (T1-T4) direkt, d.h. ohne Leistungstransformatoren vom Wechselstromnetz gespeist werden und im 4-Quadranten-Betrieb arbeiten kann. Besonderheiten der Stromregelschaltung sind ein A/D-Wandler (12), der aufgrund einer Abtastung des Motorstroms ein Istwertsignal als binären Code aus einer Mehrzahl von Bits erzeugt, und ein binäres Vergleichsschaltwerk, das den Istwertcode mit einem aus einer Anzahl parallel zugeführter Bits bestehenden Sollwertcode vergleicht und binäre Fehlersignale erzeugt, wenn der Istwert den Sollwert über- bzw. unterschreitet.

Da die Endstufe (LS) ohne Leistungsübertrager unmittelbar am Wechselstromnetz liegt, muss die das Vergleichsschaltwerk enthaltende Steuerstufe galvanisch von der Endstufe getrennt sein. Erfindungsgemäss werden die Bits des Istwertcodes über eine optoelektronische Koppeleinrichtung (14) in die Steuerstufe übertragen. Weitere Optokoppler (16, 30) können für die Übertragung sonstiger Steuersignale vorgesehen sein.

0072022

11034/EU   H/Elf

ASR Servotron AG

Av. des Grandes-Communes 8

CH-1213 Le Petit-Lancy/Genf(Schweiz)

Stromregelschaltung für einen von einer Leistungstreiberstufe gesteuerten Verbraucher

Die Erfindung bezieht sich auf eine Stromregelschaltung für einen von einer Leistungstreiberstufe gesteuerten Verbraucher, insbesondere für einen mit Impulsbreitenmodulation oder durch Taktimpulse gesteuerten Gleichstrommotor, z.B. einen Servomotor.

In derartigen Stromregelschaltungen wird der Motor über vier zu einer Brücke geschaltete Leistungstransistoren in der Leistungstreiberstufe aus einem Wechsel- oder Drehstromnetz über einen Gleichrichter gespeist. Es ist bekannt und üblich, die Gleichspannung nach dem Prinzip der Impulsbreitenmodulation oder Pulssteuerung zu regeln, wobei abwechselnd je zwei diagonale Transistoren angesteuert werden und sich die mittlere Ausgangsspannung aus dem Verhältnis der Tastzeiten ergibt. Die Tastzeiten werden vom Regler aus dem Vergleich analoger Soll- und Istwerte des Stroms abgeleitet, die von einem der Stromregelung überlagerten Drehzahlregelkreis bzw. von einem den Motorstrom messenden Differenzverstärker zugeführt werden können. Die von einem bekannten Zweipunktregler ("Elektrie"28, 1974, Heft 7, S.368-370)  als Ergebnis des Analogvergleichs gebildete Steuerimpulsfolge wird in einem Impulsverteiler mit einer Frequenz von 100 kHz

0072022

moduliert und über Torschaltungen auf getrennte Ansteuereinheiten für je zwei Brückenzweige verteilt. Die Ansteuerung der Leistungstransistoren über die Ansteuereinheiten erfolgt bei diesem bekannten Regler über je einen Impulsübertrager mit zwei Sekundärwicklungen, damit mehrere Motoren aus einer gemeinsamen Stromversorgung gespeist werden können. Die Leistungs- und Steuerstufen sind voneinander jedoch nicht vollständig galvanisch getrennt.

Nachteilig an bekannten analogen Stromregelschaltungen ist u.a. ihre geringe Bandbreite (in der Größenordnung 1 kHz), und daß sie auf Änderungen des Laststroms z.B. infolge von Überschwingvorgängen oder Störungen so langsam ansprechen, daß aus Sicherheitsgründen der Strom auf einen erheblich (z.B. 30%) unter dem an sich zulässigen Spitzenstromwert liegenden Wert begrenzt werden mußte. Vor allem ist es jedoch erwünscht, für hohe Spannungen geeignete Transistoren oder entsprechende Schaltglieder in der Brückenschaltung der Leistungstreiberstufe ohne Zwischenschaltung von aufwendigen Leistungstransformatoren direkt (über eine Gleichrichteranordnung) an das vorhandene Wechsel- oder Drehstromnetz zu schalten. In diesem Fall muß man für eine galvanische Isolation der Endstufe von ihrer Steuerstufe einschließlich deren Stromversorgung und von der gesamten übrigen Steuerelektronik des Systems sorgen, zu dem häufig Prozessrechner oder andere Datenverarbeitungsanlagen gehören. Die notwendige galvanische Isolation hat erhebliche Probleme hinsichtlich der erreichbaren Regelbandbreite (Ansprechgeschwindigkeit), der Stromversorgung der Steuerelektronik und des Aufwands zur Folge. Auch erschwert sie das Erreichen einer guten Linearität, Genauigkeit und Auflösung des Regelkreises. Besondere Schwierigkeiten bereitet es, die Steuersignale der Brückenschaltung und v.a. die Stromistwertsignale in die bzw. aus der isolierten Leistungsstufe verzögerungs- und fehlerfrei zu übertragen.

0072022

Der Erfindung liegt die Aufgabe zugrunde, eine Stromregelschaltung für eine mit Impulsbreitenmodulation oder Impulssteuerung betriebene Endstufe hoher Leistung anzugeben, die trotz vollkommener Entkopplung der Steuerstufe von der möglichst wenig Bestandteile der Steuerelektronik enthaltenden Leistungstreiberstufe einen schnellen und fehlerfreien Regelbetrieb, d.h. eine hohe Regelbandbreite gewährleistet.

Diese Aufgabe wird durch die im Anspruch 1 gekennzeichnete Stromregelschaltung gelöst.

Die Erfindung hat den Vorteil, daß bei der gewünschten Entkopplung der Steuer- und Leistungsstufen eine hohe Bandbreite des Regelkreises (u.U. mehr als 100 kHz) mit minimalem Aufwand und geringer Störanfälligkeit errreicht wird. Beispielsweise sind keine aufwendigen Trennverstärker oder sonstige Zwischenkreise erforderlich, und da sich außer der Meßanordnung zum Erzeugen des Stromistwertsignals in der Leistungstreiberstufe keine wesentlichen Teile der Steuerelektronik befinden müssen, wird deren Stromversorgung wesentlich vereinfacht. Ferner kann im Vergleich mit bekannten Systemen die Regelgenauigkeit verbessert werden und der Verbraucher mit dem maximal möglichen Strom gespeist werden, da keine nennenswerte Sicherheitsspanne zur Berücksichtigung der Regelträgheit eingehalten werden muß. Bei Überstrom etwa infolge eines Kurzschlusses ist eine sehr schnelle Abschaltung möglich. Einfach und mit wendig Aufwand ist es möglich, für zusätzliche Schutzmaßnahmen zu sorgen sowie aus den übertragenen Codes Fehler im Regelbetrieb, z.B. Vorzeichenabweichungen zu erkennen. Der Digitalbetrieb ermöglicht eine reine P-Regelcharakteristik. Das binäre Fehlersignal des Vergleichsschaltwerks kann direkt, d.h. ohne nachgeschalteten Regelverstärker das Tastverhältnis bzw. die Schaltimpulse der Endstufe steuern.

Ferner ermöglicht die beschriebene Stromregelschaltung eine freizügige Einstellung des Stromsollwerts, etwa gemäß einem Computerprogramm oder nach einer vorgegebenen Stromkurve mit relativ schnellen Änderungen, wie dies in manchen Fällen erforderlich ist. Eine ggf. notwendige Drehzahlregelung kann unabhängig vom Sollwert der Stromregelung berücksichtigt werden.

Auch die opto-elektronische Koppeleinrichtung hat im Zusammenhang mit der hier beschriebenen Stromregelschaltung besondere Vorteile. Dazu gehören zunächst die erwünschte verzögerungsfreie Übertragung des Istwertcodes und ggf. auch der Stellsignale, was für die Gewährleistung einer hohen Bandbreite von Interesse ist, und das Vermeiden von Neben- und Übersprechstörungen, da die Optokoppler sich weder untereinander stören noch durch externe Störungen beeinflußt werden können. Darüberhinaus ermöglichen Optokoppler (im Gegensatz zu magnetischen Übertragern) die statische, zeitlich unbegrenzte Übertragung von Binärsignalen. Insbesondere zur Übertragung der Stellimpulse aus der Steuerstufe in die Endstufe können aber statt Optokopplern auch sonstige Übertrager verwendet werden.

An einem in der Zeichnung dargestellten Ausführungsbeispiel wird die Erfindung näher erläutert. Es zeigen:

Figur 1 ein schematisches Blockschaltbild der Leistungstreiberstufe (Endstufe) und

Figur 2 ein schematisches Blockschaltbild der der Endstufe vorgeschalteten Steuerstufe.

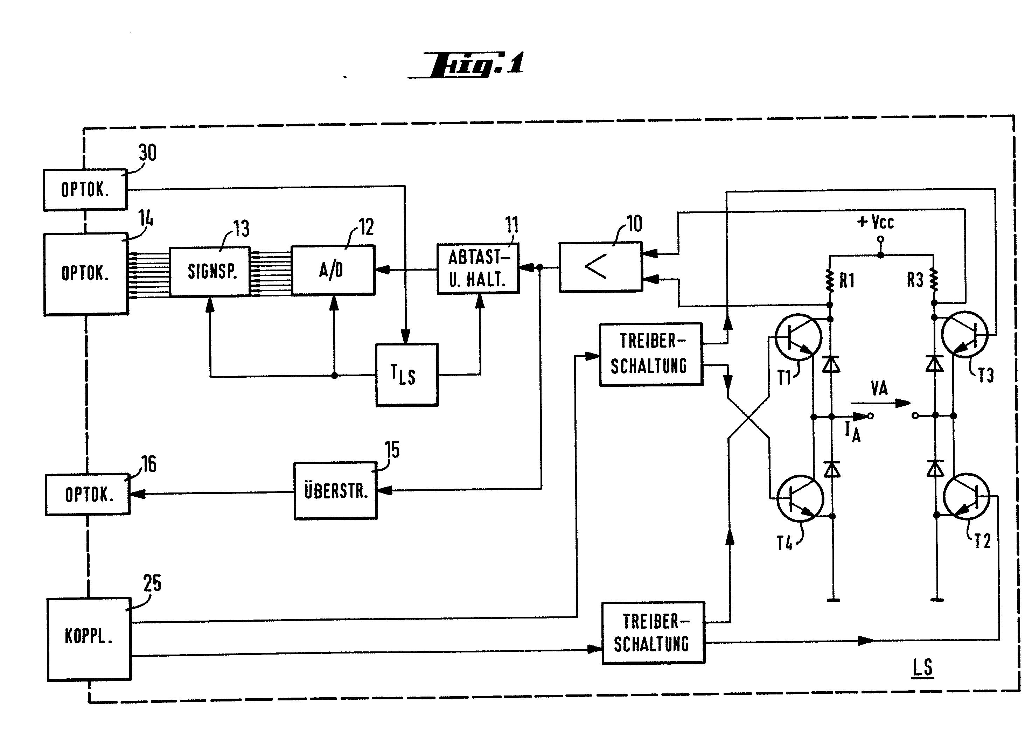

Gemäß Figur 1 sind in der Leistungstreiberstufe LS beispielsweise eines Servomotors in bekannter Weise vier Transistoren T1 bis T 4 in Brückenschaltung an eine Gleichspannungsquelle $+V_{CC}$ geschaltet, die in ebenfalls bekannter Weise z.B. durch Impulsbreitenmodulation so gesteuert werden können, daß die Ausgangs-

spannung $V_A$ zwischen O und einer Maximalspannung änderbar ist. Durch die Brückenschaltung kann die den Motor speisende Ausgangsspannung $V_A$ auch umgepolt werden. Der Motor kann also im 4-Quadranten-Betrieb arbeiten, d.h. sowohl im Rechtslauf als auch im Linkslauf sowohl angetrieben als auch ggf. unter Stromabgabe gebremst werden.

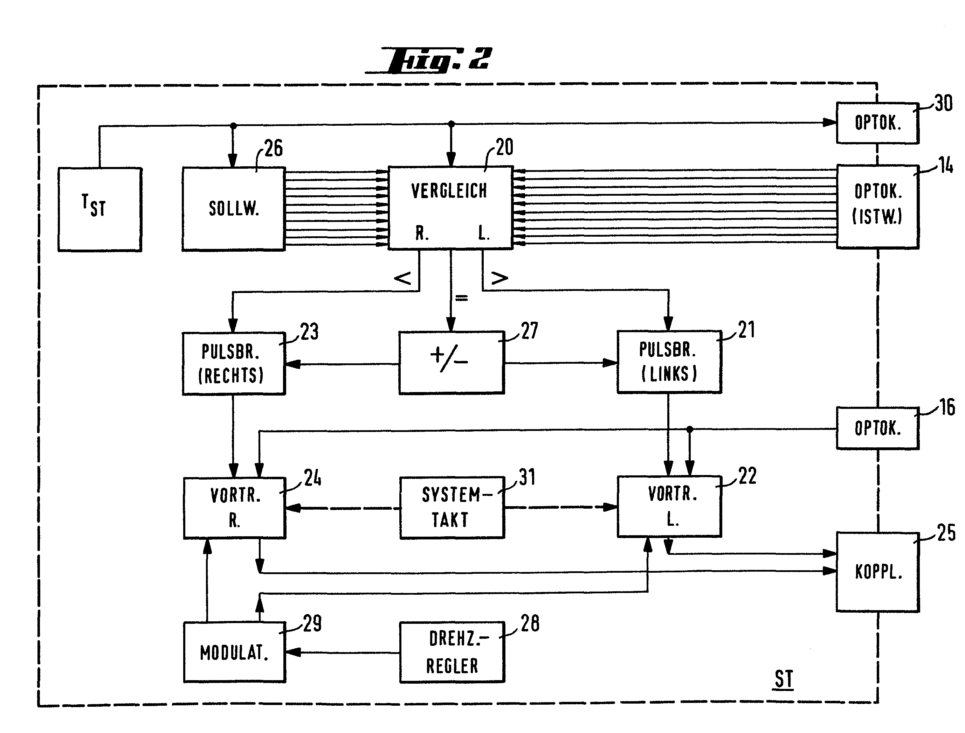

Die Spannungsquelle $+V_{CC}$ soll über einen Gleichrichter- und Glättungskreis vorzugsweise ohne Leistungstransformator direkt an das jeweils vorhandene Wechselstrom- oder 3-Phasen-Netz hoher Spannung von z.B. 380 V oder mehr angeschlossen sein. Die ferner benötigten niedrigeren positiven und negativen Betriebsspannungen (nicht dargestellt) für die im folgenden erwähnten elektronischen Schaltungen in der Leistungstreiberstufe LS werden ebenfalls vom Wechselstromnetz hergeleitet, was in diesem Fall über Transformatoren und Gleichspannungsregler möglich ist, und sind auf $+V_{CC}$ bezogen. Dagegen ist die Betriebsspannungsversorgung der Steuerstufe ST (Figur 2) von derjenigen der Leistungstreiberstufe unabhängig und insbesondere galvanisch getrennt.

Bei dem dargestellten Beispiel wird der im Motor fließende Strom $I_A$ durch Abgreifen der am Widerstand R1 (Transistor T1 und T2 leitend) bzw. am Widerstand R3 (Transistoren T3 und T4 leitend) abfallenden Spannungen gemessen. Da die Ausgangsspannung $V_A$ mit relativ hoher Frequenz moduliert wird, glättet die Motorinduktivität den Strom zu praktisch einem Gleichstrom. Statt durch Widerstände kann der Strom auch durch Wandler, Hallsonden, Trennverstärker usw. ermittelt werden. Die dargestellte Messung in den oberen Quadranten hat jedenfalls den besonderen Vorteil, daß außer den normalen Istwerten auch Kurzschlußströme z.B. infolge eines Ankerkurzschlusses gegen Masse unmittelbar erfaßt werden.

Die dem Motorstrom entsprechenden Spannungen können einer der Meßwerterfassung dienenden Verstärkerschal-

0072022

tung 10 zugeführt werden, die einen Operationsverstärker enthält, der die Differenz der beiden in den Brückendiagonalen gewonnenen Spannungen bildet und verstärkt. In der Verstärkerschaltung 10 erfolgt zugleich eine Normierung der Verstärkung zur Anpassung des Regelkreises an den gewünschten Maximalstrom. Zur Begrenzung der Regelbandbreite kann ein (nicht dargestelltes) Filter am Eingang der Verstärkerschaltung 10 dienen, das Schaltspitzen und sonstige hochfrequente Störungen unterdrückt.

An den Ausgang der Verstärkerschaltung 10 ist eine Abtast- und Halteschaltung 11 (Sample and Hold) geschaltet, die unter Steuerung durch die Taktimpulse einer örtlichen Ablaufsteuereinheit $T_{LS}$ die analogen Ausgangssignale der Verstärkerschaltung 10 zyklisch abtastet, speichert und mit der vorgegebenen Schaltfrequenz des Systems an den A/D-Wandler 12 abgibt. Der A/D-Wandler, der ebenfalls durch Taktsignale von der Ablaufsteuereinheit $T_{LS}$ gesteuert ist, wandelt seine analogen Eingangssignale in entsprechende digitale Signale um, nämlich in den aus beispielsweise 10 parallelen Bits bestehenden Istwertcode, der zunächst in einer aus Latch- oder Signalspeichern bestehenden Anordnung 13 am Ausgang des A/D-Wandlers 12 gespeichert wird. Für die gewünschte große Übertragungsbandbreite soll ein A/D-Wandler möglichst hoher Wandlungsrate verwendet werden.

Aus der Signalspeicheranordnung 13 werden die parallelen Bits des Istwertcodes ebenfalls unter Taktsteuerung durch die Ablaufsteuereinheit $T_{LS}$ gelesen und während der Lesephase statisch und störungssicher über je ein optoelektronisches Koppelelement, die in ihrer Gesamtheit mit 14 bezeichnet sind, aus der Leistungstreiberstufe LS in die Steuerstufe ST ( Figur 2) übertragen. Derartige Koppelelemente bestehen bekanntlich aus einem Lichtsender z.B. in Form einer Lumineszenzdiode und einem Phototransistor als Empfänger.

Schutzmaßnahmen bei Überstrom können durch eine Schutzschaltung 15 ausgelöst werden, die darstellungsgemäß an den Ausgang der Verstärkerschaltung 10 angeschlossen sein und bei einem unzulässigen Überstrom ein binäres Signal erzeugen kann, das ebenfalls über ein optoelektronisches Koppelelement 16 in die Steuerstufe ST übertragen wird, wo es deren Vortreibern zum Ausschalten der Leistungstreiberstufe zugeführt wird. Auch hier sind die erwähnten Vorteile eines Optokopplers von Bedeutung. Die Schutzschaltung 15 kann eingangsseitig auch an die Ausgänge des A/D-Wandlers angeschlossen werden und in diesem Fall den Istwertcode auswerten.

In der Steuerstufe ST (Figur 2) gelangen die über die Koppelelemente 14 übertragenen parallelen Bits des Istwertcodes unmittelbar an die ersten Eingänge eines binären Vergleichsschaltwerkes 20. Das Vergleichsschaltwerk 20 führt einen Parallelvergleich zwischen dem Istwertcode und einem ebenfalls als parallele Bits entsprechender Anzahl an seine zweiten Eingänge angelegten Sollwertcode durch, der einem vorgegebenen Wert des Stromes $I_A$ (Figur 1) entspricht, welcher in dem Motor oder sonstigen Verbraucher fließen soll. Wenn der gemessene Strom größer ist als der Sollwert, erzeugt das Vergleichsschaltwerk 20 an einem ersten Ausgang L ein binäres Fehlersignal, das einem Pulsbreitensteuerkreis 21 zugeführt wird, der seinerseits den Vortreiber 22 für die eine Brückendiagonale ("links") schaltet. Der Steuerkreis 21 kann z.B. einen Signalspeicher enthalten. In entsprechender Weise erzeugt das Vergleichsschaltwerk 20 an seinem zweiten Ausgang R ein Fehlersignal, das über einen Steuerkreis 23 dem Vortreiber 24 für die andere Brückendiagonale ("rechts") zugeführt wird, wenn der durch den Istwertcode ausgedrückte gemessene Strom kleiner ist als der Sollwert. Die Stellsignale der Vortreiber 22, 24 werden über Koppler 25, die optischer oder auch magnetischer Art sein können,

zu den Treiberschaltungen der Leistungstreiberstufe LS (Figur 1) übertragen.

Der Sollwertcode wird von einer binären Schaltung 26 entweder als voreingestellter Konstantwert oder variabel in Abhängigkeit von dem jeweiligen Anwendungsfall entsprechenden Bedingungen, z.B. gemäß einem Rechnerprogramm oder einer vorgegebenen Änderungskurve erzeugt, was wegen der Binärform in jedem Fall wesentlich einfacher erfolgt als bisher. Bei dem betrachteten Beispiel einer Motorsteuerung kann der Sollwert der zulässige Spitzenstrom des Motors sein.

Die Soll- und Istwertcodes werden dem Vergleichsschaltwerk 20 jeweils über Pufferspeicher und Eingangsfilter (nicht dargestellt) zugeführt, die dafür sorgen, daß die Daten mit maximal der halben Bandbreite des Stromregelkreises geändert werden können.

Im Gegensatz zu bekannten Motorsteuersystemen der betrachteten Art wird gemäß der hier beschriebenen Stromregelschaltung deren Ankerstromsollwert also vorzugsweise nicht von einem gesonderten Drehzahlregler erzeugt. Wenn ein Drehzahlregler 28 vorgesehen ist, kann dessen Ausgangssignal direkt auf einen Pulsbreitenmodulator 29 einwirken. Das Ausgangssignal des Pulsbreitenmodulators 29 kann in einem z.B. in den Vortreibern 22, 24 enthaltenen Torglied logisch mit dem jeweiligen Fehlersignal der Steuerkreise 21 bzw. 23 verknüpft werden. An einem weiteren Eingang können diese (nicht dargestellten) Torglieder durch Schutzfunktionen gesteuert werden.

Der von dem A/D-Wandler 12 erzeugte Istwertcode und der Sollwertcode werden vorzugsweise jeweils im Zweierkomplement zugeführt, das nicht nur den Vorteil hat, daß es zu beiden Seiten eines eindeutig definierten Nullwertes symmetrisch ist (gleiche Codezahlen für positive und negative Werte), sondern auch eine sehr einfache Ermittlung des dem jeweiligen Betriebsquadranten des Motors (Stromrichtung) entsprechenden Vorzeichens erlaubt. Die Vorzeichenermittlung sowohl des Sollwertes als auch des Istwertes erfolgt ebenfalls durch das Vergleichsschaltwerk 20, das einen dritten Ausgang hat, an dem bei Übereinstimmung von Ist- und Sollwert, jedoch infolge einer Störung abweichendem Vorzeichen ein Alarmsignal erzeugt wird. Dieses Alarmsignal kann in einer Alarmschaltung 27 gespeichert und zur Abschaltung der Leistungstreiberstufe beispielsweise über die Steuerkreise 21, 23 und die Vortreiber 22, 24 verwendet werden.

Die Steuerstufe ST enthält eine Ablaufsteuereinheit $T_{ST}$, die über eine optoelektronische Koppeleinheit 30 mit der Steuereinheit $T_{LS}$ der Leistungstreiberstufe LS gekoppelt und mit dieser synchronisiert ist. Die Steuereinheit $T_{ST}$ liefert Taktsignale an die Sollwert-Schaltung 26 und an das Vergleichsschaltwerk 20 und steuert damit die Ein- und Ausgabe der beiden Codes in bzw. aus an den Eingängen des Vergleichsschaltwerk 20 vorgesehenen Signalspeichern.

Zur Durchführung des Parallelvergleichs zwischen den beiden Codes kann das Vergleichsschaltwerk 20 handelsübliche Magnitude-Comparator-Kreise (MM54C85/MM74C85 der Fa. National Semiconductor) enthalten, welche die gewünschten drei Ausgangssignale für "größer", "kleiner" und "gleich" liefern.

Bei der konventionellen Pulsbreitenmodulation der in Figur 1 dargestellen Transistorbrücke wird die Ausgangsspannung $V_A$ auf alle Werte zwischen nahezu $+V_{CC}$ und $-V_{CC}$ durch die Wahl des Tastverhältnisses zwischen den beiden Brückendiagonalen eingestellt, indem je-

0072022

weils die Transistoren einer Diagonale (T1 und T2 bzw.
T3 und T4) gleichzeitig geschaltet werden. Das Umschalten erfolgt stets mit einer kurzen stromlosen Pause für
alle Transistoren.

Stattdessen kann aber auch ein in verschiedener Hinsicht
günstigeres Steuerprinzip angewendet werden, bei dem je
nach der Stromrichtung ein Transistor der einen bzw. der
anderen Diagonale ständig leitet und nur der andere
Transistor der betreffenden Diagonale hinsichtlich der
Pulsbreite gesteuert wird, während die jeweils andere
Diagonale gesperrt bleibt. Dieses unipolare Steuerprinzip ist vorteilhaft, weil u.a. der gesteuerte Transistor
verzögerungsfrei abgeschaltet werden kann und bessere
Störunabhängigkeit sowie geringerer Aufwand insbesondere
für die üblichen Entlastungsnetzwerke der Leistungstransistoren erreicht werden, doch ist andererseits eine
zeitdiskrete Steuerung der Transistoren erforderlich. Damit
ist gemeint, daß die Transistoren nur zu genau definierten
Zeitpunkten umgeschaltet werden können, die durch Taktimpulse einer in Figur 2 bei 31 angedeuteten Systemtakteinheit bestimmt werden. Diese Einheit ist mit dem Betrieb
der Regelschaltung synchronisiert. Mit dem unipolar wirkenden zeitdiskreten Steuersystem läßt sich die hier beschriebene digitale Regelschaltung besonders sinnvoll
kombinieren.

Gemäß diesem Prinzip der unipolaren zeitdiskreten Ansteuerung der Leistungstransistoren, die von dem konventionellen Prinzip der Pulsbreiten-Modulation zu unterscheiden ist, haben die Leistungstransistoren T1 bis
T4, die nur zu den durch das Taktsignal der Einheit 31
(die auch die Einheit $T_{ST}$ steuern kann) definierten
Zeiten ein- und ausgeschaltet werden können, z.B. bei
gewünschter positiver Stromrichtung des Motors folgenden Leitzustand:

0072022

T4 und T3 ständig gesperrt; T1 ständig leitend;
T2 leitend bei $I_{IST} < I_{SOLL}$;
T2 gesperrt bei $I_{IST} > I_{SOLL}$.

Wird dagegen negative Stromrichtung eingestellt, so
ergibt sich der Zustand

T1 und T2 gesperrt; T3 ständig leitend;
T4 leitend bei $I_{IST} < I_{SOLL}$;
T4 gesperrt bei $I_{IST} > I_{SOLL}$.

Bei gegebener Stromrichtung wird also die Stromstärke
nur mit einem der vier Leistungstransistoren geregelt,
im Falle positiver Stromrichtung mit dem Transistor
T2. Dieser kann z.B. beim Beschleunigen des Motors
mit Spitzenstrom und auch im Sollgeschwindigkeitsbetrieb, bei der der Stromwert gewöhnlich niedriger
ist, in Abhängigkeit von der Verbrauchs- bzw. Motorinduktivität jeweils eine oder wenige Taktperioden
lang leitend bleiben. Bei jedem Taktimpuls wird von
dem Vergleichsschaltwerk 20 festgestellt, ob der
Sollwert erreicht oder bereits überschritten ist, und
ggf. der Transistor T2 eine oder mehrere Taktperioden
lang gesperrt, bis der Stromsollwert wieder erreicht
oder unterschritten ist, usw.

Zur Vermeidung von Verzögerungen ist es zweckmäßig, die
Bits des das Strom-Istwertsignal darstellenden Codes
parallel in die Steuerstufe ST zu übertragen. Unter Umständen besteht aber auch die Möglichkeit, die Bits
seriell zu übertragen und sie in der Steuerstufe über
einen Serien-Parallel-Wandler an das Vergleichsschaltwerk anzulegen, falls die Arbeitsgeschwindigkeit der
verfügbaren Wandler für den jeweiligen Fall ausreicht.
Die Serienübertragung ist z.B. dann von Interesse, wenn
der Istwert-Code nicht über die oben erwähnten Optokoppler übertragen werden soll, die eine eng benachbarte Anordnung von Sender und Empfänger der Koppler und somit der beiden Stufen LS und ST voraussetzen, sondern über mindestens eine Glasfaserleitung, die eine erhebliche räumliche Trennung und unter anderem eine noch bessere Störfreiheit ermöglicht. Die Parallelübertragung über entsprechend viele Glasfaserleitungen wäre eventuell zu aufwendig.

Eine getaktete Endstufe, für die die Stromregelschaltung geeignet ist, kann statt Leistungstransistoren andere Halbleiterbauelemente enthalten, die sich für eine Pulsbreitenmodulation eignen, wie z.B. sogenannte Gate-Turnoff-Thyristoren. Im übrigen eignet sich die beschriebene digitale Stromregelschaltung nicht nur für im 4-Quandranten-Betrieb arbeitende Motoren, sondern für beliebige andere Verbraucher.

Während bei dem oben beschriebenen Beispiel der Motorstrom mit den Widerständen R1,R3 in zwei Brückenzweigen (in den oberen Quadranten) gemessen wird, kann es je nach dem verwendeten Ansteuerprinzip in gewissen Fällen zweckmässiger sein, den Strom direkt im Motorkreis bzw. in der entsprechenden Brückendiagonale zu messen.

11034/EU    H/Elf

P a t e n t a n s p r ü c h e
_____

1. Stromregelschaltung für einen von einer Leistungstreiberstufe gesteuerten Verbraucher, insbesondere für
einen Gleichstrommotor, der über mit Impulsbreiten- oder
ähnliche Modulation gesteuerte Halbleiterschalter wie Leistungstransistoren gespeist wird und im 4-Quadranten-
Betrieb arbeiten kann, mit einer in der Leistungstreiberstufe enthaltenen Meßanordnung zum Erzeugen eines dem im
Verbraucher fließenden Strom entsprechenden Istwertsignals, und mit einer Steuerstufe, in der eine Vergleichsschaltung den Stromistwert mit einem Stromsollwert, der
einem vorgegebenen oder jeweils gewünschten Verbraucherstrom entspricht, vergleicht und an zwei Ausgängen einer
Abweichung entsprechende Fehlersignale zum Steuern der
Halbleiterschalter bzw. Leistungstransistoren erzeugt
werden, die unter galvanischer Entkopplung in die Leistungstreiberstufe übertragen werden,

d a d u r c h   g e k e n n z e i c h n e t ,
daß die Meßanordnung der Leistungstreiberstufe (LS) einen
A/D-Wandler (12) enthält, der auf Grund einer Abtastung
des im Verbraucher fließenden Stroms das Istwertsignal als
binären Code aus einer Mehrzahl von Bits erzeugt,

daß diese Bits aus der Leistungstreiberstufe (LS) über eine
opto-elektronische Koppeleinrichtung (14) in die Steuerstufe (ST) übertragen werden,

daß die in der Steuerstufe (ST) vorgesehene Vergleichsschaltung ein binäres Vergleichsschaltwerk (20) ist, das
den Istwertcode in Form paralleler Bits mit einem ebenfalls aus einer Anzahl parallel zugeführter Bits bestehenden Sollwertcode vergleicht, und daß das Vergleichsschaltwerk (20) an einem ersten Ausgang (L) ein binäres Fehlersignal erzeugt, wenn der Istwert den Sollwert überschreitet, und an einem zweiten Ausgang (R) ein binäres Fehlersignal, wenn der Istwert den Sollwert unterschreitet.

2. Stromregelschaltung nach Anspruch 1, d a d u r c h g e k e n n z e i c h n e t , daß der A/D-Wandler mit einer Abtast- und Halteschaltung (11) verbunden ist, die unter Steuerung durch ein Taktsignal zyklisch den Verbraucherstrom abtastet, die Abtastwerte speichert und an den A/D-Wandler (12) abgibt, und daß der A/D-Wandler (12), eine an dessen Ausgängen vorgesehene Signalspeicheranordnung (13) und das Vergleichsschaltwerk (20) durch dem Abtasttakt entsprechende Taktsignale einer Ablaufsteuereinheit ($T_{LS}$, $T_{ST}$) gesteuert sind.

3. Stromregelschaltung nach einem der vorangehenden Ansprüche, d a d u r c h g e k e n n z e i c h n e t, daß zwischen die Stromkreise der eine Brückenschaltung bildenden Leistungstransistoren und die Abtastschaltung des A/D-Wandlers (12) ein Operationsverstärker (Schaltung 10) geschaltet ist, der zur Meßwerterfassung die Differenz der Stromwerte der beiden Brückendiagonalen bildet.

4. Stromregelschaltung nach einem der vorangehenden Ansprüche, d a d u r c h g e k e n n z e i c h n e t, daß zwischen die Stromkreise der Leistungstransistoren und die Abtastschaltung ein Filter zur Begrenzung der Regelbandbreite geschaltet ist.

0072022

5. Stromregelschaltung nach einem der vorangehenden Ansprüche, d a d u r c h   g e k e n n z e i c h - n e t , daß der Istwert einer Schutzschaltung (15) zugeführt ist, die auf einen unzulässigen Überstrom anspricht und ein binäres Überstromsignal erzeugt, das über ein optoelektronisches Koppelelement (16) in die Steuerstufe (ST) übertragen und deren Vortreibern (22, 24) für die Leistungstreiberstufe (LS) zugeführt wird.

6. Stromregelschaltung nach einem der vorangehenden Ansprüche, d a d u r c h   g e k e n n z e i c h - n e t , daß der Istwertcode und/oder der Sollwertcode dem Vergleichsschaltwerk (20) jeweils über eine Puffer- und Signalspeicheranordnung und über ein Eingangsfilter zugeführt wird, das die Änderungsrate des betreffenden Codes auf etwa die halbe Bandbreite des Stromregelkreises begrenzt.

7. Stromregelschaltung nach einem der vorangehenden Ansprüche, d a d u r c h   g e k e n n z e i c h - n e t , daß die Soll- und Istwertcodes im Zweierkomplement zu dem Vergleichswerk (20) übertragen werden und daß das Vergleichswerk (20) hieraus das Vorzeichen der Soll- und Istwertcodes ermittelt und bei einer Vorzeichenabweichung ein Alarmsignal erzeugt.

8. Stromregelschaltung nach einem der vorangehenden Ansprüche, d a d u r c h   g e k e n n z e i c h - n e t , daß die beiden beim Über- bzw. Unterschreiten des Stromsollwertes erzeugten Fehlersignale des Vergleichsschaltwerks (20) je einem Torglied zugeführt sind, die an je einem weiteren Eingang von dem Ausgangssignal eines Modulators (29) gesteuert sind und mit ihrem Ausgangssignal die Leistungstreiberstufe (LS) steuern.

9. Stromregelschaltung nach Anspruch 8, d a - durch gekennzeichnet , daß der Modulator (29) von einem Drehzahlregler (28) für den von der Leistungstreiberstufe (LS) zu speisenden Motor steuerbar ist.

10. Stromregelschaltung nach Anspruch 1, d a - durch gekennzeichnet , daß der das Strom-Istwertsignal darstellende Code in die Steuerstufe (ST) über mindestens eine Glasfaserleitung übertragen wird.

11. Verwendung der Stromregelschaltung nach einem der vorangehenden Ansprüche für eine Leistungstreiberstufe, von deren zu einer Brücke geschalteten Transistoren bei einer gegebenen Stromrichtung nur jeweils der eine Transistor der betreffenden Brückendiagonale durch die Modulation gesteuert wird und der andere Transistor dieser Diagonale ständig leitet, während die Transistoren der anderen Brückendiagonale gesperrt bleiben, wobei die Schaltzeiten der Transistoren durch eine gegebene Taktimpulsfolge bestimmt werden.

**Fig. 1**

Fig. 2

0072022

Europäisches
Patentamt

**EUROPÄISCHER RECHERCHENBERICHT**

Nummer der Anmeldung

EP 82 10 7215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | H 02 P 7/28 |
| A | INTERNATIONAL JOURNAL OF ELECTRONICS, Band 46, Nr. 5, Mai 1979, Seiten 507-512, London, G.B. M. JULLIERE et al.. "An 'H'-type switching mode power supply for d.c. servo motors" * Insgesamt * | 1,3 | |
| | --- | | |
| A | REGELUNGSTECHNISCHE PRAXIS, Band 20, Nr. 12, Dezember 1978, Seiten 355-359, München, DE. U. CLAUSSEN et al.: "Motorregelung mit Mikrorechner" * Seiten 355-356, Absatz 1: Einleitung; Bilder 1,2 * | 1 | |
| | --- | | |
| A | FR-A-2 434 511 (D.B.A.) * Seite 8, Zeile 9 - Seite 10, Zeile 11; Figuren * & DE - A - 2 930 559 | 1,5,11 | |
| | | | RECHERCHIERTE SACHGEBIETE (Int. Cl. ³) |
| | --- | | H 02 P |
| A | DE-A-2 714 302 (R. QUERFURTH) * Seite 8, Zeile 1 - Seite 9, Zeile 21; Figur 4 * | 1 | H 02 M G 05 D |
| | --- | | |
| A | DE-A-2 818 800 (BBC) * Seite 8, Zeile 21 - Seite 9, Zeile 19; Figur 1 * | 1,3 | |
| | --- -/- | | |

Der vorliegende Recherchenbericht wurde für alle Patentansprüche erstellt.

| Recherchenort DEN HAAG | Abschlußdatum der Recherche 22-11-1982 | Prüfer HOUILLON J.C.P.L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument